# EUROPÄISCHE PATENTSCHRIFT

(11) **EP 0 355 195 B1**
(45) Veröffentlichungstag und Bekanntmachung des Hinweises auf die Patenterteilung: **22.12.1993**
(21) Anmeldenummer: 88113898.6
(22) Anmeldetag: 25.08.1988
(51) Int. Cl.: H01G 9/00

(54) **Fest-Elektrolykondensator**
Solid electrolytic capacitor
Condensateur électrolytique solide

(43) Veröffentlichungstag der Anmeldung: 28.02.1990
(73) Patentinhaber: SIEMENS AKTIENGESELLSCHAFT, 80333 München (DE)
(72) Erfinder: Winkler, Gernot, D-7920 Heidenheim (DE); Oldekop, Edwin, D-7920 Heidenheim (DE)

(56) Entgegenhaltungen:
- EP-A- 0 110 134
- FR-A- 2 295 547
- FR-A- 2 443 738
- US-A- 4 107 762
- ERZMETALL, Band 38, Nr. 3, März 1985, Seiten 133-138, VCH Verlagsgesellschaft mbH, Weinheim, DE; R. HÄHN et al.: "Neue Trends bei der Entwicklung von Tantal-Kondensatorpulvern"

## Beschreibung

Die Erfindung betrifft einen Fest-Elektrolytkondensator mit einer Sinteranode aus einem Ventilmetall, einer darauf angeordneten, als Dielektrikum dienenden Oxidschicht, einem halbleitendem Elektrolyt als Kathode, einer Kathodenkontaktierung sowie einem Anoden- und Kathodenanschluß, bei dem zwischen Kathodenkontaktierung und Kathodenanschluß eine Schmelzdrahtsicherung angeordnet ist.

Ein derartiger Kondensator ist aus der DE 29 47 185 A1 bekannt. Dort ist ein Sicherungselement in Drahtform in einer Ausnehmung eines Körpers enthalten, der aus einem thermisch isolierenden Material gebildet ist. Die das Sicherungselement aufnehmende Ausnehmung ist größer als das Sicherungselement, so daß das Sicherungselement selbst nicht in Kontakt mit dem Körper steht und thermisch abgeschirmt ist. Das Sicherungselement besteht beispielsweise aus einem Palladium/Aluminiumdraht, der zwischen dem Kathodenanschluß und einer silbernen Kathoden-Lötschicht angeordnet ist.

Als Ventilmetall wird bei derartigen Kondensatoren hauptsächlich Tantalpulver verwendet, aus dem eine Sinteranode hergestellt wird. Auf diese Anode wird durch einen Formierprozeß eine als Dielektrikum dienende Oxidschicht erzeugt. Als Kathode verwendet man hauptsächlich halbleitendes Mangandioxid, das durch wiederholtes Tauchen der Sinterkörper beispielsweise in eine Mangannitratlösung mit anschließender Pyrolyse erhalten wird. Diese Mangandioxidschicht wird mit einer Kontaktierung versehen, an die ein äußerer Kathodenanschluß angebracht werden kann.

An und für sich zeichnen sich diese Kondensatoren durch hohe Zuverlässigkeit und geringe Ausfallraten (ca. 10 fit) aus. Aufgrund versteckter Materialfehler oder Produktionsfehler kann jedoch eine Feldkristallisation zum Versagen der Sperrwirkung des Dielektrikums führen. Diese Erscheinung wird als Katastrophenfehler bezeichnet, weil bei niederohmigen Schaltkreisen der sich einstellende Kurzschlußstrom zu einem Oxidieren der Tantalanode führen kann. Die dabei auftretende Hitzeentwicklung kann zu weiterer thermischer Schädigung führen, beispielsweise eine mit diesen Kondensatoren bestückte Platine in Brand setzen.

Weiterhin kann im Fall der Falschpolung der Festelektrolytkondensatoren ein hoher Strom fließen, der ebenfalls zu den beschriebenen Auswirkungen führt.

Aus diesen Gründen ist der eingangs beschriebene Kondensator durch eine Abschaltvorrichtung gesichert, die den Stromkreis beim Auftreten eines hohen Kurzschlußstromes irreversibel unterbricht.

Die aus dem Stand der Technik bekannte Abschaltvorrichtung ist jedoch aufwendig herzustellen und bedingt eine Gehäusevergrößerung der fertigen Kondensatoren.

Aufgabe der Erfindung ist es daher, einen Fest-Elektrolytkondensator der eingangs genannten Art anzugeben, der eine kostengünstig zu montierende Abschaltvorrichtung aufweist, die schon bei kleinen Kurzschlußströmen den Stromkreis unterbricht und sowohl bei Kondensatoren mit Metallbechern als auch bei Kondensatoren mit Kunststoffgehäusen einsetzbar ist.

Diese Aufgabe wird erfindungsgemäß dadurch gelöst, daß die Kathodenkontaktierung aus einer auf dem halbleitendem Elektrolyt angeordneten Graphitschicht und zumindest einer auf der Graphitschicht angebrachten elektrisch leitfähigen Schicht besteht, die in der Umgebung des Kathodenanschlusses mit einer elektrisch isolierenden Schicht bedeckt ist, daß die nicht von der isolierenden Schicht abgedeckte elektrisch leitfähige Schicht mit einer Zinnschicht versehen ist und daß die Schmelzdrahtsicherung zwischen der Zinnschicht und dem Kathodenanschluß angeordnet ist.

Eine weitere erfindungsgemäße Lösung besteht darin, daß die Kathodenkontaktierung aus einer auf dem halbleitendem Elektrolyt angeordneten Graphitschicht und zumindest einer auf der Graphitschicht angebrachten elektrisch leitfähigen Schicht besteht, die in der Umgebung des Kathodenanschlusses mit einer elektrisch isolierenden Schicht bedeckt ist, daß die nicht von der isolierenden Schicht abgedeckte elektrisch leitfähige Schicht mit einer Zinnschicht versehen ist, daß in der Umgebung des Kathodenanschlusses eine weitere elektrisch leitfähige Schicht angeordnet ist, die mit der ersten elektrisch leitfähigen Schicht keinen elektrischen Kontakt besitzt, daß die zweite elektrisch leitfähige Schicht mit einer weiteren Zinnschicht bedeckt ist und daß die Schmelzdrahtsicherung zwischen der ersten Zinnschicht und der zweiten Zinnschicht angeordnet ist.

Zweckmäßige Weiterbildungen der Erfindung sind in den Unteransprüchen angeführt.

Die Vorteile des Gegenstandes der Erfindung werden anhand der folgenden Ausführungsbeispiele näher erläutert.

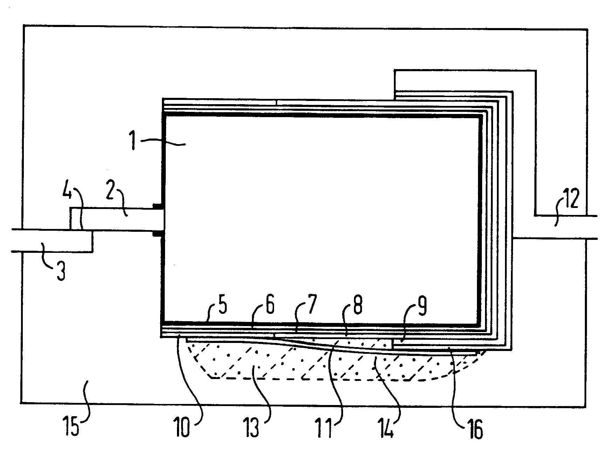

In der dazugehörenden Zeichnung ist der prinzipielle Aufbau eines Kondensators gemäß der Erfindung dargestellt. Eine Sinteranode 1 aus einem Ventilmetall, z.B. Tantal, ist mit einer in der Figur nicht dargestellten Dielektrikumsschicht sowie einer als Kathode wirkenden halbleitenden Elektrolytschicht 5, z.B. aus Mangandioxid, versehen. Die Sinteranode 1 ist mit einem Anodenanschluß 2 aus vorzugsweise dem gleichen Ventilmetall versehen. Der Anodenanschluß 2 ist mit einem äußeren Anodenanschlußelement 3 an der Schweißstelle 4 verbunden. Auf der Mangandioxidschicht 5 ist eine Graphitschicht 6 angeordnet und auf dieser Schicht 6 eine erste elektrisch leitfähige Schicht 7, die vorzugsweise aus einem mit Silberpartikeln durchsetzten und somit leitfähigem polymeren Lack besteht. Diese Schicht 7 bedeckt die gesamte äußere Oberfläche der Kathode 5 mit Ausnahme der den Anodenanschluß 2 tragenden Stirnseite.

Eine Schicht 8 aus einem elektrisch isolierendem Lack, die etwa nur zwei Drittel der äußeren Kathodenoberfläche bedeckt, ist wiederum nur zu einem Teil von einer weiteren Schicht 9 aus einem elektrisch leitfähigem Lack überzogen.

Vorteilhaft werden sowohl die Schichten 7 bzw. 9 aus dem elektrisch leitfähigem Lack und die Schicht 8 aus dem elektrisch isolierendem Lack durch Tauchen der Anodenkörper in entsprechende Lösungen aufgebracht.

Die beiden an der Oberfläche verbleibenden elektrisch leitfähigen Schichten 7 bzw. 9 sind durch Tauchlöten mit Zinnschichten 10 bzw. 16 versehen und durch einen weichlötbaren, dünnen Sicherungsdraht 11 miteinander verbunden, der nun die elektrische Verbindung zu einem auf der Zinnschicht 16 angeordneten Kathodenanschluß 12 darstellt und der beim Auftreten von Kurzschlußströmen des Kondensators als Abschaltvorrichtung dient, indem er durch Eigenerwärmung schmilzt und eine Trennung der Zuleitung herbeiführt.

Der Sicherungsdraht 11 ist beispielsweise an die Zinnschichten 10 und 16 angelötet. Der Kathodenanschluß 12 ist vorzugsweise ebenfalls durch Lötung mit der Zinnschicht 16 verbunden.

Das äußere Anodenanschlußelement 3 besteht vorzugweise aus einem verzinkten Nickeldraht oder Nickelblech. Als Lack zur Herstellung der Schichten 7, 8 und 9 können beispielsweise die handelsüblichen Pasten 4929 und 5045, beide verdünnbar, der Fa. Du Pont, verwendet werden.

Neben der in der Figur dargestellten Möglichkeit, den Sicherungsdraht 11 zwischen den Zinnschichten 10 und 16 anzuordnen, besteht auch die Möglichkeit, daß der Sicherungsdraht 11 von der Zinnschicht 10 direkt an den Kathodenanschluß 12 geführt wird, um dort durch Löten oder Schweißen die elektrisch leitende Verbindung herzustellen.

Für die Abschaltcharakteristik ist neben den geometrischen Abmessungen des Sicherungsdrahtes 11 und seiner Lötstellen das Material entscheidend. Ein handelsüblicher Aluminiumfeindraht mit einem Mantel aus Palladium eignet sich nicht nur wegen seines spezifischen Widerstandes, sondern auch wegen seines Schmelzpunktes (ca. 660°C) und der Lötbarkeit. Weiterhin wird die Abschaltcharakteristik durch das den Sicherungsdraht umhüllende Material bestimmt. Luft als Umgebungsmedium führt aufgrund der schlechten Wärmeleitung zu kleinen Abschaltenergien.

Wenn das Gehäuse 15 aus einem Epoxidharz besteht, sind kleine Sicherungsdrahtdurchmesser von beispielsweise 50 µm zweckmäßig.

Eine Verbesserung der Abschaltcharakteristik wird dadurch erreicht, daß der Sicherungsdraht 11 nach dem Anlöten an die Zinnschichten 10 und 16 bzw. den Kathodenanschluß 12 mit einer Mischung aus hochtemperaturbeständigem Epoxidharz 13 und hohlen Mikrokugeln 14 abgedeckt wird, so daß der Sicherungsdraht 11 von dieser Mischung umgeben ist.

Die hohlen Mikrokugeln bestehen vorzugsweise aus Natriumborsilicatglas, das bei ca. 480°C erweicht, und schaffen so für das im Kurzschlußfall schmelzende Sicherungsdrahtmaterial Volumen, so daß eine sichere Trennung der Kathodenkontaktierung erfolgt.

Die hohlen Mikrokugeln aus Natriumborsilicatglas haben beispielsweise einen Durchmesser von 20 bis 200 µm und sind unter dem Handelsnamen "Eccospheres" erhältlich. Der Anteil an diesen hohlen Mikrokugeln 14 in dem hochtemperaturbeständigem Epoxidharz 13 kann beliebig sein, jedoch wird durch einen Mindestanteil von z.B. 60 % an Epoxidharz sichergestellt, daß die ballonartige Struktur der Kugeln beim Auftreten von Scherkräften nicht verloren geht. Diese Scherkräfte treten auf beim Umhüllen nach bekannten Umpreßmethoden. Andererseits darf der Anteil der Mikrokugeln 14 nicht zu klein sein, damit beim Abschaltvorgang neben dem Erweichen der Mikrokugeln 14 auch noch durch Bruch zusätzlicher Kugeln in weiter entfernten Gebieten um den Sicherungsdraht 11 zusätzliches Volumen freigegeben werden kann. In diesem Volumen finden neben dem schmelzenden Material des Sicherungsdrahtes 11 Zersetzungsprodukte des Epoxidharzes Raum.

Der Vorteil dieser Volumenbildung beim Schmelzen des Sicherungsdrahtes 11 liegt in dem deutlich kleineren Abschaltintegral im Vergleich zu bekannten Abschaltvorrichtungen, bei denen der schmelzende Sicherungsdraht von dem Material des Kondensatorgehäuses direkt umgeben ist.

Anstelle von hochtemperaturbeständigem Epoxidharzen 13 eignen sich auch andere polymere Materialien wie z.B. Siliconharze.

Mit den Fest-Elektrolytkondensatoren nach der Erfindung können mögliche Überlastungen von Schaltkreisen vermieden werden, indem die Abdeckung des Sicherungsdrahtes im Fall eines Kurzschlusses des Festelektrolytkondensators Hohlräume freigibt, die eine sichere Abschaltung gewährleisten, wobei durch unterschiedliche Dimensionierungen des Sicherungsdrahtes die Abschaltcharakteristik beeinflußt werden kann.

## Patentansprüche

1. Fest-Elektrolytkondensator mit einer Sinteranode aus einem Ventilmetall, einer darauf angeordneten, als Dielektrikum dienenden Oxidschicht, einem halbleitenden Elektrolyt als Kathode, einer Kathodenkontaktierung sowie einem Anoden- und Kathodenanschluß, bei dem zwischen Kathodenkontaktierung und Kathodenanschluß eine Schmelzdrahtsicherung angeordnet ist,
**dadurch gekennzeichnet,** daß die Kathodenkontaktierung aus einer auf dem halbleitenden Elektrolyt (5) angeordneten Graphitschicht (6) und zumindest einer auf der Graphitschicht (6) angebrachten elektrisch leitfähigen Schicht (7) besteht, die in der Umgebung des Kathodenanschlusses (12) mit einer elektrisch isolierenden Schicht (8) bedeckt ist, daß die nicht von der isolierenden Schicht (8) abgedeckte elektrisch leitfähige Schicht (7) mit einer Zinnschicht (10) versehen ist und daß die Schmelzdrahtsicherung zwischen der Zinnschicht (10) und dem Kathodenanschluß (12) angeordnet ist.

2. Fest-Elektrolytkondensator mit einer Sinteranode aus einem Ventilmetall, einer darauf angeordneten, als Dielektrikum dienenden Oxidschicht, einem halbleitenden Elektrolyt als Kathode, einer Kathodenkontaktierung sowie einem Anoden-und Kathodenanschluß, bei dem zwischen Kathodenkontaktierung und Kathodenanschluß eine Schmelzdrahtsicherung angeordnet ist,
**dadurch gekennzeichnet,** daß die Kathodenkontaktierung aus einer auf dem halbleitenden Elektrolyt (5) angeordneten Graphitschicht (6) und zumindest einer auf der Graphitschicht (6) angebrachten elektrisch leitfähigen Schicht (7) besteht, die in der Umgebung des Kathodenanschlusses (12) mit einer elektrisch isolierenden Schicht (8) bedeckt ist, daß die nicht von der isolierenden Schicht (8) abgedeckte elektrisch leitfähige Schicht (7) mit einer Zinnschicht (10) versehen ist, daß in der Umgebung des Kathodenanschlusses (12) eine weitere elektrisch leitfähige Schicht (9) angeordnet ist, die mit der ersten elektrisch leitfähigen Schicht (7) keinen elektrischen Kontakt besitzt, daß die zweite elektrisch leitfähige Schicht (9) mit einer weiteren Zinnschicht (16) bedeckt ist und daß die Schmelzdrahtsicherung (11) zwischen der ersten Zinnschicht (10) und der zweiten Zinnschicht (16) angeordnet ist.

3. Fest-Elektrolytkondensator nach Anspruch 1 oder 2,
**dadurch gekennzeichnet,** daß die elektrisch leitfähigen Schichten (7, 9) aus einem mit Silberpartikeln durchsetzten polymeren Lack bestehen.

4. Fest-Elektrolytkondensator nach zumindest einem der Ansprüche 1 bis 3,
**dadurch gekennzeichnet,** daß die Schmelzdrahtsicherung (11) mit einer Mischung aus einem hochtemperaturbeständigen Kunststoff (13) und hohlen Mikrokugeln (14) abgedeckt ist.

5. Fest-Elektrolytkondensator nach Anspruch 4,
**dadurch gekennzeichnet,** daß die hohlen Mikrokugeln (14) aus Natriumborsilikatglas mit einer Erweichungstemperatur von ca. 480°C bestehen.

6. Fest-Elektrolytkondensator nach Anspruch 5,
**dadurch gekennzeichnet,** daß die hohlen Mikrokugeln einen Durchmesser von 20 bis 200 µm besitzen.

7. Fest-Elektrolytkondensator nach zumindest einem der Ansprüche 4 bis 6,
**dadurch gekennzeichnet**, daß der Kunststoff (13) aus einem hochtemperaturbeständigem Epoxidharz besteht.

8. Fest-Elektrolytkondensator nach zumindest einem der Ansprüche 4 bis 6,
**dadurch gekennzeichnet,** daß der Kunststoff (13) aus einem Silikonharz besteht.

## Claims

1. Solid-electrolyte capacitor having a sintered anode made of a valve metal, an oxide layer disposed thereon and serving as dieletric, a semiconducting electrolyte as cathode, a cathode contact, and an anode connection and a cathode connection, in which capacitor a fusible-wire fuse is disposed between cathode contact and cathode connection, characterised in that the cathode contact comprises a graphite layer (6) disposed on the semiconducting electrolyte (5) and at least one electrically conductive layer (7) which is applied to the graphite layer (6) and which is covered with an electrically insulating layer (8) in the area surrounding the cathode connection (12), in that the electrically conductive layer (7) not covered by the insulating layer (8) is provided with a tin layer (10), and in that the fusible-wire fuse is disposed between the tin layer (10) and the cathode connection (12).

2. Solid-electrolyte capacitor having a sintered anode made of a valve metal, an oxide layer disposed thereon and serving as dielectric, a semiconducting electrolyte as cathode, a cathode contact, and an anode connection and cathode connection, in which capacitor a fusible-wire fuse is disposed between cathode contact and cathode connection, characterised in that the cathode contact comprises a graphite layer (6) disposed on the semiconducting electrolyte (5) and at least one electrically conductive layer (7) which is applied to the graphite layer (6) and which is covered with an electrically insulating layer (8) in the area surrounding the cathode connection (12), in that the electrically conductive layer (7) not covered by the insulating layer (8) is provided with a tin layer (10), in that a further electrically conductive layer (9), which does not have any electrical contact to the first electrically conductive layer (7), is disposed in the area surrounding the cathode connection (12), in that the second electrically conductive layer (9) is covered with a further tin layer (16), and in that the fusible-wire fuse (11) is disposed between the first tin layer (10) and the second tin layer (16).

3. Solid-electrolyte capacitor according to Claim 1 or 2, characterised in that the electrically conductive layers (7, 9) comprise a polymeric lacquer permeated with silver particles.

4. Solid-electrolyte capacitor according to at least one of Claims 1 to 3, characterised in that the fusible-wire fuse (11) is covered with a mixture of a high-temperature-resistant polymer (13) and hollow microspheres (14).

5. Solid-electrolyte capacitor according to Claim 4, characterised in that the hollow microspheres (14) comprise sodium borosilicate glass having a softening temperature of approximately 480°C.

6. Solid-electrolyte capacitor according to Claim 5, characterised in that the hollow microspheres have a diameter of 20 to 200 µm.

7. Solid-electrolyte capacitor according to at least one of Claims 4 to 6, characterised in that the polymer (13) comprises a high-temperature-resistant epoxy resin.

8. Solid-electrolyte capacitor according to at least one of Claims 4 to 6, characterised in that the polymer (13) comprises a silicone resin.

## Revendications

1. Condensateur électrolytique solide comportant une anode frittée en un métal soupape, une couche d'oxyde qui y est appliquée et qui sert de diélectrique, un électrolyte semiconducteur servant de cathode, un contact de cathode ainsi qu'une borne d'anode et une borne de cathode, dans lequel une sécurité par fil fusible est interposée entre le contact de cathode et la borne de cathode,
caractérisé en ce que le contact de cathode est constitué d'une couche (6) de graphite appliquée sur l'électrolyte (5) semiconducteur et d'au moins une couche (7) conductrice de l'électricité, appliquée sur la couche (6) de graphite et recouverte à proximité de la borne (12) de cathode d'une couche (8) électriquement isolante, en ce que la couche (7) conductrice de l'électricité et non recouverte de la couche (8) isolante est munie d'une couche (10) d'étain, et en ce que la sécurité par fil fusible est interposée entre la couche (10) d'étain et la borne (12) de cathode.

2. Condensateur électrolytique solide comportant une anode frittée en un métal soupape, une couche d'oxyde qui y est appliquée et qui sert de diélectrique, un électrolyte semiconducteur servant de cathode, un contact de cathode ainsi qu'une borne d'anode et une borne de cathode, dans lequel une sécurité par fil fusible est interposée entre le contact de cathode et la borne de cathode,
caractérisé en ce que le contact de cathode est constitué d'une couche (6) de graphite appliquée sur l'électrolyte (5) semiconducteur et d'au moins une couche (7) conductrice de l'électricité, appliquée sur la couche (6) de graphite et recouverte à proximité de la borne (12) de cathode d'une couche (8) électriquement isolante, en ce que la couche (7) conductrice de l'électricité et non recouverte de la couche (8) isolante est munie d'une couche (10) d'étain, en ce qu'il est prévu, au voisinage de la borne (12) de cathode, une autre couche (9) conductrice de l'électricité, qui n'a pas de contact électrique avec la première couche (7) conductrice de l'électricité, en ce que la deuxième couche (9) conductrice de l'électricité est recouverte d'une autre couche (6) d'étain, et en ce que la sécurité (11) par fil fusible est interposée entre la première couche (10) d'étain et la deuxième couche (16) d'étain.

3. Condensateur électrolytique solide suivant la revendication 1 ou 2, caractérisé en ce que les couches (7, 9) conductrices de l'électricité sont en un vernis polymère chargé de particules d'argent.

4. Condensateur électrolytique solide suivant l'une au moins des revendications 1 à 3,
caractérisé en ce que la sécurité (11) par fil fusible est recouverte d'un mélange de matière plastique (13) résistant à une température haute et de billes (14) microscopiques et creuses.

5. Condensateur électrolytique solide suivant la revendication 4,
caractérisé en ce que les billes (14) microscopiques et creuses sont en verre au borosilicate de sodium ayant une température de ramollissement de 480°C.

6. Condensateur électrolytique solide suivant la revendication 5,
caractérisé en ce que les billes microscopiques et creuses ont un diamètre de 20 à 200 mm.

7. Condensateur électrolytique solide suivant l'une au moins des revendications 4 à 6,
caractérisé en ce que la matière plastique est en une résine époxyde résistant à une température haute.

8. Condensateur électrolytique solide suivant l'une au moins des revendications 4 à 6,
caractérisé en ce que la matière plastique (13) est en une résine de silicone.
